(19)

Europäisches
Patentamt

European
Patent Office

Office européen
des brevets

(11) **EP 2 630 818 B1**

(12) **EUROPEAN PATENT SPECIFICATION**

(45) Date of publication and mention
of the grant of the patent:
**03.01.2018 Bulletin 2018/01**

(21) Application number: **10775759.3**

(22) Date of filing: **22.10.2010**

(51) Int Cl.:
***H04W 16/28*** *(2009.01)*

(86) International application number:
**PCT/EP2010/065992**

(87) International publication number:
**WO 2012/052066 (26.04.2012 Gazette 2012/17)**

(54) **METHODS FOR CELL SELECTION BALANCING, COMPUTER PROGRAMS AND COMPUTER PROGRAM PRODUCTS**

VERFAHREN FÜR ZELLAUSWAHLBALANCE, COMPUTERPROGRAMME UND COMPUTERPROGRAMMPRODUKTE

PROCÉDÉS D'ÉQUILIBRAGE DE SÉLECTION DE CELLULE, PROGRAMMES D'ORDINATEUR ET PRODUITS PROGRAMME D'ORDINATEUR

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.08.2013 Bulletin 2013/35**

(73) Proprietor: **Telefonaktiebolaget LM Ericsson (publ)**
**164 83 Stockholm (SE)**

(72) Inventors:
• **GAN, Jiansong**
**Beijing 100192 (CN)**
• **BERG, Jan-Erik**
**S-191 40 Sollentuna (SE)**
• **DIMOU, Konstantinos**
**S-113 41 Stockholm (SE)**

(74) Representative: **Brann AB**
**P.O. Box 3690**
**Drottninggatan 27**
**103 59 Stockholm (SE)**

(56) References cited:
**EP-A2- 2 169 994          WO-A1-2009/115554**
**US-A1- 2005 130 662**

• **NOKIA CORPORATION ET AL: "SON WI Status Overview", 3GPP DRAFT; R2-093231, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. San Francisco, USA; 20090428, 28 April 2009 (2009-04-28), XP050340925, [retrieved on 2009-04-28]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Field of the invention**

The present invention relates generally to cellular wireless communication, and in particular to cell selection balancing in cellular wireless communication systems.

**Background of the invention**

In recent cellular systems, such as GSM, UMTS and its 3GPP evolutions, handover decisions are based on measurements made mainly on downlink pilot signals (signaling from base station to user equipment). These measurements give an indication of an average path gain and transmission power in the downlink. For the 3GPP long term evolution (LTE), handover-related measurements similar to the ones existing in previous 3GPP releases are proposed. In particular, one measurement is the received power from the pilot signal, which in LTE is termed reference signal. This measured entity is called reference signal received power (RSRP) and can be written as:

$$RSRP = P_{T_x} \cdot g$$

, where $P_{T_x}$ is the transmission power of the base station allocated for the downlink reference signal and $g$ is the average path gain.

Thus, even though the user equipment may have the same path gain to two different base stations, the RSRP received from these two base stations may differ considerably as the transmission power from these two base stations may differ substantially.

The above is especially the case in heterogeneous networks (HetNets) wherein base stations with different transmission power exist in the same geographical area. Heterogeneous networks have for example been considered for complementing macro cell layouts in order to handle non-uniform traffic distributions. Macro cells could be used in certain areas primarily for coverage and smaller cells, e.g. micro, pico, femto cells, could be used for high capacity needs at traffic hotspots. The heterogeneous network may thus comprise a mixture of differently sized cells with overlapping coverage areas, the cells having different characteristics.

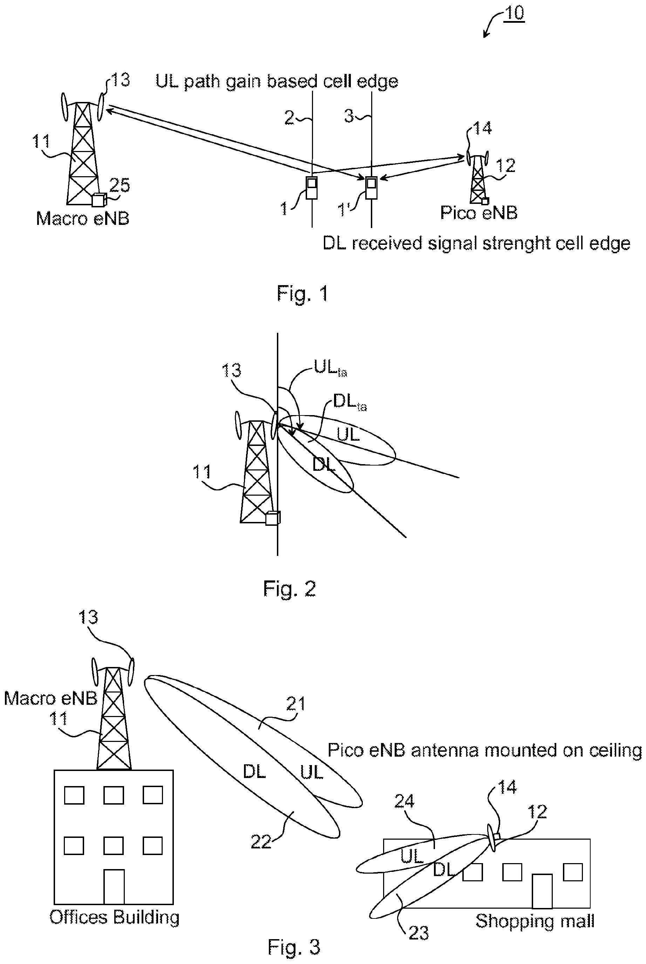

In contrast to cell selection based on downlink measurements, cell selection based on uplink measurements (signaling from user equipment to base station) is not impacted by the downlink transmission power from the base station, and is typically based only on path gain. In e.g. the heterogeneous network, the difference in uplink-based cell selection and downlink-based cell selection leads to different cell borders when the two selection mechanisms are applied. This is illustrated in figure 1. In particular, if the cell selection for user equipment 1 is uplink-based then a first cell border 2 is obtained, while if the cell selection for the same user equipment, now indicated at reference numeral 1', is downlink-based then a second cell border 3 is obtained.

The different cell borders 2, 3 created by uplink-based and downlink-based cell selection in heterogeneous networks make it difficult to decide whether to use uplink-based cell selection or downlink-based cell selection. Depending on the type of cell selection chosen, challenging interference scenarios are created, as is described next.

For downlink-based cell selection, low-power base stations typically have much smaller cell radius than macro base stations. User equipment connected to a macro base station may need to transmit with high power in uplink and hence generate high interference to low-power base stations uplink reception.

For uplink-based cell selection, low-power base stations have similar cell radius as macro base stations. User equipment connected to a low-power base station and located close to a macro base station suffers from low downlink geometry for both data and control signaling, as the macro base station usually transmits much higher power than the low-power base station. Document US20050130662 discloses, in a hierarchical cell system, unbalancing uplink and downlink micro cell boundaries based on conditions like macro base station height, radio link propagation condition between macro and micro base station, or geographical relationship between macro cell base station and micro cell base station.

One solution proposed within 3GPP is to use uplink-based cell selection. An advantage of the uplink-based cell selection is that the low-power base station will have a larger coverage compared to downlink-optimized cell selection. This in turn makes full use of the low-power base station and optimizes the overall system capacity. In addition, this saves some transmission power at the user equipment.

A solution for solving the problem for low-geometry downlink was proposed in 3GPP and comprises a blank-frame solution, in which the control region of some sub-frames in the macro cell is muted. In doing this, the low-geometry problem associated with the uplink-optimized cell selection can be void for control region and the received quality of control information can therefore be guaranteed. For user equipment conforming to Release 8, wherein cross-subframe scheduling is not applicable, sub-frames whose downlink control part is empty are going to be empty also in the data part. This applies for both downlink and uplink. For user equipment conforming to Release 10, wherein cross-scheduling is most likely going to be an option, then data region can be used and the allocation of the previous non-blanked sub-frame in the downlink control region is going to be valid at the current almost blank sub-frame.

In summary, the fundamental reason for the different cell borders between uplink and downlink-based cell selection in heterogeneous network is that the downlink-based cell selection considers downlink transmission power and downlink path gain, while uplink-optimized cell selection considers uplink path gain and user equipment transmission power. Since the user maximum equipment transmission power is the same independent of the serving cell, what counts for the uplink-based cell selection is thus only the uplink path gain. Usually and in the absence of feeders and tower mounted amplifiers the uplink and downlink average path gain does not differ that much, hence the difference in downlink transmission power makes the cell selection for uplink and downlink different.

Blank frame solution improves the received quality of control information from low-power base station. However, the solution has some drawbacks. A first drawback is a large standardization effort that would be required, e.g. regarding changes in air interface and blank frame solution. A second drawback is that the data region in an under-laid cell suffers from low geometry unless Inter Carrier Interference Coordination (ICIC) is deployed. It is questionable whether classical ICIC algorithms with frequency partitioning would be efficient in so low downlink geometries. A third drawback is that user equipment that does not support cross-frame scheduling would suffer from reduced transmission opportunities in an overlaid cell. From the above, it is clear that there is a need for an improvement on this situation in this field of technology.

## Summary of the invention

In view of the above, the invention is directed towards methods and arrangements for providing similar cell borders irrespective of cell selection method.

One object of the invention is thus to provide methods for obtaining similar cell borders irrespective of cell selection method.

This object is according to a first aspect of the invention achieved through a method according to claim 1 and a computer program according to claim 11. By means of the invention, uplink-downlink imbalance problems, particularly in heterogeneous networks, are eliminated or at least alleviated. Further, information that in most cases is already available may be used and no additional measurements made by the user equipment are needed. Still further, there is no need for heavy signaling exchange between the base stations via e.g. X2 interface. The invention can be implemented in all wireless communication systems, such as for example LTE, UMTS and GSM and by means of the invention, standardization issues, such as blank frame solution and air interface changes, are not necessary.

In an embodiment of the invention the method comprises a further step of the first base station transmitting information to the second base station, enabling the second base station to adjust its antenna settings in dependence thereon. The invention is preferably implemented in all base stations of the wireless communication system, wherein all base stations exchange information and adjust their antenna settings in dependence thereon.

In another embodiment of the invention, the steps of receiving information and adjusting antenna settings are repeated, whereby the antenna settings are adjusted dynamically. A method is provided that is adaptable to changing conditions.

In yet another embodiment of the invention, the antenna settings comprise a downlink tilt angle and/or an uplink tilt angle. By adjusting the downlink and/or uplink tilt angle, an optimized cell selection is provided whereby similar cell borders for uplink and downlink cell selection are obtained.

In still another embodiment of the invention, the information received comprises one or more of: transmission power of the first or second base station, height of the at least one respective antenna of the first and/or second base station, distance between the first and second base station, horizontal angle between main antenna beam of a first base station and antenna beam of a second antenna. A number of parameters may thus be used in determining the best antenna settings, the method thus being adaptable to best suit the conditions of any wireless communication system.

In an embodiment of the invention, the wireless communication system comprises a heterogeneous cellular network comprising overlaid cells and underlaid cells. The present invention is particularly suitable for use in systems having base stations of inherently different power levels, such as the heterogeneous network. In such networks, the cell balancing problems are often pronounced and can be alleviated by the present invention.

In another embodiment of the invention, the first base station is located in an overlaid cell and the second base station is located in an underlaid cell. In the above embodiments, the method may comprise the further step of adjusting, in the first base station, the uplink down-tilting angle and downlink down-tilting angle based on the location of the second base station and any other base stations located in the overlaid cell.

In the above embodiments, the step of adjusting may comprise setting uplink down-tilting angle smaller than downlink tilting angle if most of the base stations of the underlaid cells are located close to a cell edge of the first base stations. In another scenario, the step of adjusting may setting uplink down-tilting angle equal to the downlink down-tilting angle if the base stations of the underlaid cells are uniformly distributed in the overlaid cell. The invention thus provides a particular solution for very commonly occurring network set-ups, e.g. wherein pico cells are located close to the cell border of their macro cell.

In an embodiment of the invention, the first base station is located in an underlaid cell and the second base station is located in an overlaid cell, and the method comprises, in the first base station, the further steps of receiving from the second base station information about the transmission power of the second base station, comparing its downlink transmission power with the transmission power of the second base station and determining a difference there between, and adjusting, in the first base station, its downlink tilting angle in uplink and downlink based on the transmission power difference. The transmission power of adjacent base stations is a parameter most suitable for use in the inventive method, and is also a parameter that is often already available in the base stations as it is used for other purposes.

In an embodiment of the invention, the step of adjusting, in the first base station, comprises the substeps of: determining antenna settings of the antenna of the first base station in dependence on the information, and transmitting control signals to an antenna control device controlling the antenna of the base station, thereby enabling the antenna control device to adjust the antenna settings. Such adjustment of the antenna settings can be done mechanically or electrically.

The invention also encompasses computer programs and computer program products, by means of which advantages corresponding to the above are achieved.

Further features and advantages thereof will become clear upon reading the following description and together with the accompanying drawings.

**Brief description of the drawings**

Figure 1 illustrates a wireless communication system and different cell borders resulting from different cell selection methods.

Figure 2 illustrates schematically a feature of a reconfigurable antenna system.

Figures 3 and 4 illustrate a heterogeneous network, in which the present invention may be implemented.

Figure 5 illustrates a flow chart over steps of a method in accordance with the present invention.

**Detailed description of embodiments of the invention**

With reference again to figure 1, a wireless communication system 10, in which the present invention may be implemented, is illustrated. The wireless communication system 10 may comprise any number of base stations; in the figure a first base station 11 and a second base station 12 are illustrated. It is noted that the term base station is used throughout the description, and intended to encompass different types of base stations irrespective of type of cellular communication system. For example, in LTE (Long term evolution), the base station is denoted evolved Node B (eNB).

The first base station 11 comprises at least one antenna 13, which is part of an antenna system, typically comprising a number of antennas and an antenna control part. The antenna control part is schematically illustrated at reference numeral 25. Likewise, the second base station 12 comprises an antenna system in turn comprising at least one antenna 14 and an antenna control part. The wireless communication system 10 further comprises a number of wireless user equipment, one of which is illustrated in the figure at reference numeral 1. The antennas 13, 14 of the respective base stations 11, 12 are used for transmitting downlink signaling and receiving uplink signaling for communicating with the user equipment 1.

The present invention is advantageously implemented in a system having base stations using different power levels, for example a heterogeneous cellular network, comprising cells of different sizes and/or overlaid cells having within their coverage area a number of underlaid cells. The first base station 11 may thus be a macro base station and the second base station 12 may for example be a pico base station.

One challenge in wireless communication is error rates caused by interference and unpredictable environments. In addition to the changing environment, user traffic also changes over time. Reconfigurable antenna systems were introduced to meet such changes in environments and traffic requirements. With reconfigurable antenna systems, parameters such as for example an azimuth beam-width and shape, elevation beam-width and shape, and antenna tilt can be reconfigured and adaptive to the mentioned changes thereby leading to better resource usage. In accordance with the invention, such reconfigurable antenna system is used for overcoming or at least alleviating problems of the prior art.

Figure 2 illustrates one possibility with the reconfigurable antenna system. In particular, it is possible to form different down-tilting for uplink (UL) and downlink (DL), which is taken advantage of in the present invention. A downlink tilt angle $DL_{ta}$ and an uplink tilt angle $UL_{ta}$ are illustrated schematically in the figure 2. The tilting of antennas for obtaining different antenna beams can be implemented by mechanical means or electrically.

Figure 3 illustrates a macro base station 11 and a low-power node for example a pico base station 12 mounted on a ceiling, e.g. located on the ceiling of a shopping mall. In accordance with an embodiment of the invention, the pico base station 12 uses different down-tilting for uplink 23 and downlink 24 for balancing the different cell borders resulting from uplink/downlink cell selection methods. The difference between uplink down-tilting and downlink down-tilting can be set based on different parameters, for example on the power difference between the macro base station 11 and the pico base station 12.

The macro base station 11 may also set different down-tilting for uplink and downlink if it will help the uplink/downlink balance.

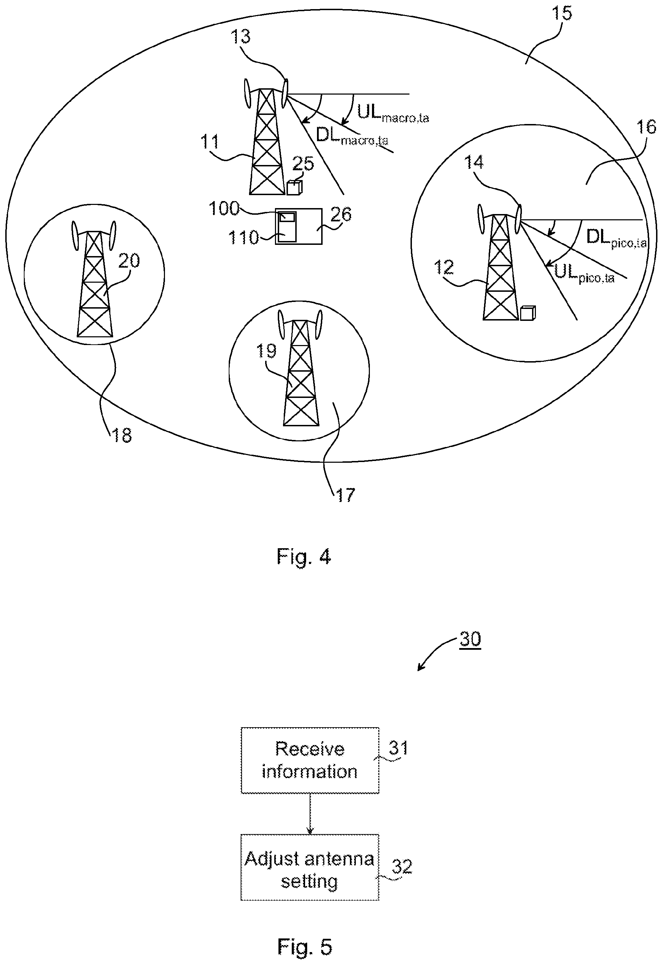

Figure 4 illustrates a heterogeneous network, wherein same reference numerals as in the previous figures are used. The first base station 11 is in this embodiment a macro base station located in an overlaid cell 15. The second base station 12 is in this embodiment a pico base station located in an underlaid cell 16, the coverage of which lies within the coverage of the overlaid cell 15. Two additional pico base stations 19, 20 are illustrated to be located within a respective underlaid cell 17, 18. When most of the pico base stations are deployed at the cell edge of the macro base station 11, which is a most typical scenario for pico applications, setting uplink down-tilting smaller than the downlink down-tilting will help the balancing between uplink and downlink.

In an embodiment, the macro base station 11 shares information about its downlink transmission power with the pico base stations 12, 19, 20, for example by transmitting such information in conventional manner between interconnected base stations. The pico base stations 12, 19, 20 compare their respective downlink transmission power with the transmission power of the macro base station 11 and calculate a power difference $\Delta P_i$. Each pico base station 12, 19, 20 then adjusts its downlink tilting in uplink and downlink. The larger the power difference $DP_i$ is, the smaller the downlink down-tilting is set and the larger the uplink down-tilting is set.

The macro base station 11 may also adjust its uplink down-tilting and downlink down-tilting based e.g. on the pico base stations respective location. If most of the pico base stations 12, 19, 20 are located close to the macro base stations cell border, then the macro base station 11 can set its uplink down-tilting smaller than its downlink down-tilting. If the pico base stations 12, 19, 20 are essentially uniformly distributed in the macro base stations 11 cell coverage, then the macro base station 11 may, for example, use the same uplink and downlink down-tilting.

The above is a particular example, and it is realized that the antenna settings of the base stations can be set in dependence on different types of information that is exchanged between the base stations. Information about transmission power is a most useful parameter to base the settings on, but other parameters may be useful as well. In other embodiments, the information may for example comprise the height of the respective antennas 13, 14 of the base stations 11, 12, and the antenna settings may be set accordingly. Given the same antenna tilt, different height of the antenna gives different cell sizes, and the height is thus a relevant parameter. In still another embodiment, wherein a heterogeneous network is used, the distance between two macro base stations that are located closest to a smaller base station (e.g. a pico base station) may be relevant. In particular, the longer distance to the macro base stations, the larger is the coverage area of the pico base station and the downlink tilting angle of the pico base station may be set smaller. In yet other embodiments, parameters such as the distance between the base stations and/or the angle to a main antenna beam of a macro base station from the pico base station, and/or horizontal angle between a main antenna beam of a macro base station antenna and the antenna beam of the micro base station antenna may be used.

With reference figure 5, the invention provides a method for cell selection balancing in the wireless communication system 10 comprising at least a first and a second base station 11, 12 and at least one wireless user equipment 1. The first and second base stations 11, 12 comprise at least one respective antenna 13, 14 for transmitting downlink signaling and receiving uplink signaling for communicating with the user equipment 1. The method 30 is implemented in the base stations 11, 12, preferably in each of the base stations of the wireless communication system 10.

The method 30 is described in the following as implemented in the first base station 11. The method 30 comprises the first step of receiving 31, in the first base station 11, information from the second base station 12. The information may be conveyed in any suitable manner between the base stations 11, 12, for example using conventional communication means. It is noted that the first base station 11 may receive information from several other base stations. In an embodiment, the first base station receives information from its neighboring cells. In an embodiment, wherein the first base station 11 is a macro base station, i.e. base station of an overlaid cell and wherein several underlaid cells are present, the first base station 11 receives information from all the underlaid cells.

The information may for example comprise one or more of the following: the transmission power of the second base station 12, the height of the respective antennas 13, 14 of the first and/or second base station 11, 12, the distance between the first and second base station 11, 12, angle to a main antenna beam of the first base station, distance between two macro base stations that are located closest to a smaller base station (e.g. a pico base station).

The method 30 comprises the second step of adjusting 32, in the first base station 11, antenna settings of its antenna 13 in dependence on the received information. Depending on the information that is received, e.g. transmission power of another base station, different antenna settings can be altered. The antenna settings may for example be the downlink tilt angle $DL_{macro,ta}$ of the first base station 11 or the uplink tilt angle $UL_{macro,ta}$ of the first base station 11; both these antenna settings, or just one, or none, may be adjusted in dependence on the received information.

As the invention preferably is implemented in each of the base stations of e.g. the heterogeneous network, the method 30 may comprise the further step of the first base station 11 transmitting information to the second base station 12, and any other base station, whereby the second base station 12 is enabled to adjust its antenna settings in dependence thereon.

The steps of receiving 31 information and adjusting 32 antenna settings are in an embodiment repeated and the antenna settings may thus be adjusted dynamically. It is noted that the inventive method for cell selection balancing is optimized at a system level, and typically not at a user level, and the antenna settings are typically not adjusted dynamically during and in dependence on a single communication session. In particular, the antenna settings are normally adjusted if the allocated power of the base station is changed.

As mentioned earlier, the invention is particularly advantageous in the heterogeneous network, and in an embodiment, the first base station 11 is located in the overlaid cell 15 and the second base station 12 is located in the underlaid cell 16. The method 30 in the first base station 11, thus being a macro base station, may then comprise the further step of transmitting information about its transmission power to the second base station 12, the second base station 12 thus being e.g. a pico or macro base station. The information may also be transmitted to any other base station 19, 20 located in an underlaid cell 17, 18 to the overlaid cell 15.

In the above embodiment, the method may then comprise the further step of adjusting, in the first base station 11, the uplink down-tilting angle and downlink down-tilting angle based on the location of the second base station 12 and any other base stations located in the overlaid cell 15. In particular and as described earlier in connection with figure 4, the adjusting may comprise setting uplink down-tilting angle smaller than downlink tilting angle if most of the base stations 12, 19, 20 of the underlaid cells 16, 17, 18 are located close to a cell edge of the first base station 11.

In another scenario, if the base stations 12, 19, 20 of the underlaid cells 16, 17, 18 are uniformly distributed in the overlaid cell 15, settings other than in the above scenario may be desirable. In such scenario, it may be difficult to set the downlink/uplink tiltings for all of the different low power nodes within the macro cell coverage, i.e. for all base stations of the underlaid cells. In such case, and as an example, a default setting may be to set the uplink down-tilting angle equal to the downlink down-tilting angle. As another example for the same scenario, the operator may want to solve the cell selection imbalance problems, wherein the base stations of the underlaid cells closest to the base station of the overlaid cell have more serious imbalance problems than base stations of underlaid cells far away. The operator may then want to set the antenna settings based on the base stations of the underlaid cells closest to the base station of the overlaid cell, and ignore the impact on the base stations of underlaid cell farther away from the base station of the overlaid cell.

an operator may want to extend the range of one or a few of the base stations of the underlaid cells and therefore set the tiltings based on the requirements for these few base stations.

In another embodiment, the first base station 11 is instead located in an underlaid cell 16 and the second base station 12 is located in an overlaid cell 15. The method 30 then comprises, in the first base station 11, the further steps of receiving from the second base station 12 information about the transmission power of the second base station 12; comparing its downlink transmission power with the transmission power of the second base station 12 and determining a difference ΔP there between; adjusting, in the first base station 11, its downlink tilting angle in uplink and downlink based on the transmission power difference ΔP. All other underlaid cells may also adjust their antenna settings in dependence on the transmission power difference.

In a particular embodiment, the step of adjusting 32 comprises the first sub-step of determining antenna settings of the antenna 13 of the first base station 11 in dependence on the information, and the second sub-step of transmitting control signals to an antenna control device 25 that is controlling the antenna 13 of the base station 11. That is, the antenna control device 25 receives the control signals and adjusts the antenna settings based thereon.

With reference again to figure 4, the invention also encompasses computer program and computer program products. The method may be implemented in a processor device 26 of a base station 11. A computer program 100 for cell selection balancing in a wireless communication network 10 is provided. The computer program 100 comprises computer program code which when run on the processor device 26 of the base station 11, 12, 19, 20 causes the processor device 26 to process information received from one or more other base stations 11, 12, 19, 20 in order to determine antenna settings of an antenna of the base station in dependence on the received information, and to transmit control signals to the antenna control device 25 that is controlling the antenna of the base station 11, 12, 19, 20 for adjusting antenna settings of the antenna in dependence on the received information. Yet additional steps of the method as described may be implemented in the processor device 26, the computer program 100 and computer program product 110.

The invention also provides a computer program product 110 comprising the above computer program 100 and a computer readable means on which the computer program 100 is stored.

**Claims**

1. A method for cell selection balancing in a heterogeneous wireless communication system (10) comprising at least a first and a second base station (11, 12) and at least one user equipment (1), said first and second base stations (11, 12) comprising at least one respective antenna (13, 14,) for transmitting downlink signaling and receiving uplink signaling for communicating with said at least one user equipment (1), said method (30) comprising the steps of:

- receiving (31), in said first base station (11), information from said second base station (12), the information comprising transmission power of the second base station (12), comparing, in said first base station (11) downlink transmission power of said first base station (11) with said received transmission power of said second base station (12) to determine a difference, $\Delta P$, there between; and

- adjusting (32), in said first base station (11), antenna settings ($UL_{macro,ta}$, $DL_{macro,ta}$; $UL_{pico,ta}$, $DL_{pico,ta}$) of the antenna (13) of the first base station (11) in dependence on said difference, $\Delta P$, wherein said antenna settings comprise an uplink tilt angle ($UL_{macro,ta}$, $UL_{pico,ta}$), or a downlink tilt angle ($DL_{macro,ta}$, $DL_{pico,ta}$), forming different down-tilting for uplink and downlink.

2. The method as claimed in claim 1, comprising a further step of said first base station (11) transmitting information to said second base station (12), enabling said second base station (12) to adjust its antenna settings in dependence thereon.

3. The method as claimed in claim 1 or 2, wherein said steps of receiving (31) information and adjusting antenna settings ($UL_{macro,ta}$, $DL_{macro,ta}$; $UL_{pico,ta}$, $DL_{pico,ta}$) are repeated, whereby said antenna settings ($UL_{macro,ta}$, $DL_{macro,ta}$; $UL_{pico,ta}$, $DL_{pico,ta}$) are adjusted dynamically.

4. The method as claimed in any of the preceding claims, wherein said information comprises one or more of: transmission power of said first second base station (11), height of said at least one respective antenna (13, 14) of said first and/or second base station (11, 12), distance between said first and second base station (11, 12).

5. The method as claimed in any of the preceding claims, wherein said wireless communication system (10) comprises a heterogeneous cellular network comprising overlaid cells (15) and underlaid cells (16, 17, 18).

6. The method as claimed in any of the preceding claims, wherein said first base station (11) is located in an overlaid cell (15) and said second base station (12) is located in an underlaid cell (16), comprising, in said first base station (11), the further step of:

- transmitting information about its transmission power to said second base station (12) and any other base station (19, 20) located in an underlaid cell (17, 18) to said overlaid cell (15).

7. The method as claimed in claim 6, comprising the further step of :

- adjusting, in said first base station (11), the uplink down-tilting angle and downlink down-tilting angle based on the location of said second base station (12) and any other base stations located in said overlaid cell (15).

8. The method as claimed in claim 7, wherein said adjusting comprises setting uplink down-tilting angle smaller than downlink tilting angle if most of said base stations (12, 19, 20) of said underlaid cells (16, 17, 18) are located close to a cell edge of said first base stations (11), or setting uplink down-tilting angle equal to said downlink down-tilting angle if said base stations (12, 19, 20) of said underlaid cells (16, 17, 18) are uniformly distributed in said overlaid cell (15).

9. The method as claimed in any of claims 1-5, wherein said first base station (11) is located in an underlaid cell (16) and said second base station (12) is located in an overlaid cell (15).

10. The method as claimed in any of the preceding claims, wherein said step of adjusting (32), in said first base station (11), comprises the sub-steps of:

- determining antenna settings of said antenna (13) of said first base station (11) in dependence on said information, and

- transmitting control signals (32) to an antenna control device (25) controlling said antenna (13) of said base station (11), thereby enabling said antenna control device (25) to adjust said antenna settings ($UL_{macro,ta}$, $DL_{macro,ta}$; $UL_{pico,ta}$, $DL_{pico,ta}$).

11. A computer program (100) for cell selection balancing in a heterogeneous wireless communication network (10) comprising computer program code which when run on a processor device (26) of a base station (11, 12, 19, 20) of said wireless communication network (10) causes said processor device (26) to:

- process information received from one or more other base stations (11, 12, 19, 20) in order to determine antenna settings of an antenna of said base station in dependence on said information, the information comprising transmission power of the one or more other base stations (11, 12, 19, 20);

compare, in said base station (11, 12, 19, 20), downlink transmission power of said base station (11, 12, 19, 20) with said received transmission power of the one or more other base stations (11, 12, 19, 20) to determine a difference, $\Delta P$, there between; and

- transmit control signals (32) to an antenna control device (25) controlling said antenna of said base station (11, 12, 19, 20) for adjusting antenna settings ($UL_{macro,ta}$, $DL_{macro,ta}$; $UL_{pico,ta}$, $DL_{pico,ta}$), comprising an uplink tilt angle ($UL_{macro,ta}$, $UL_{pico,ta}$), or a downlink tilt angle ($DL_{macro,ta}$, $DL_{pico,ta}$), of said antenna in dependence on said difference, $\Delta P$, forming different down-tilting for uplink and downlink.

12. A computer program product (110) comprising a computer program (100) according to claim 11 and a computer readable means on which said computer program is stored.

**Patentansprüche**

1. Verfahren für Zellauswahlbalance in einem heterogenen drahtlosen Kommunikationssystem (10), das mindestens eine erste und eine zweite Basisstation (11, 12) und mindestens ein Benutzergerät (1) umfasst, wobei die erste und die zweite Basisstation (11, 12) jeweils mindestens eine Antenne (13, 14) zum Senden einer Downlink-Signalisierung und zum Empfangen einer Uplink-Signalisierung zum Kommunizieren mit dem mindestens einem Benutzergerät (1) umfasst, wobei das Verfahren (30) die folgenden Schritte umfasst:

- Empfangen (31) von Informationen von der zweiten Basisstation (12) in der ersten Basisstation (11), wobei die Informationen eine Sendeleistung der zweiten Basisstation (12) umfassen;
- Vergleichen einer Downlink-Sendeleistung der ersten Basisstation (11) mit der empfangenen Sendeleistung der zweiten Basisstation (12) in der ersten Basisstation (11), um eine Differenz, $\Delta P$, zwischen ihnen zu bestimmen; und
- Anpassen (32) der Antenneneinstellungen ($UL_{macro,ta}$, $DL_{macro,ta}$; $UL_{pico,ta}$, $DL_{pico,ta}$) der Antenne (13) der ersten Basisstation (11) in der ersten Basisstation (11) in Abhängigkeit von der Differenz, $\Delta P$,

wobei die Antenneneinstellungen einen Uplink-Neigungswinkel ($UL_{macro,ta}$, $UL_{pico,ta}$) oder einen Downlink-Neigungswinkel ($DL_{macro,ta}$, $DL_{pico,ta}$) umfassen, die verschiedene Neigungen nach unten für Uplink und Downlink bilden.

2. Verfahren nach Anspruch 1, umfassend einen weiteren Schritt, bei dem die erste Basisstation (11) Informationen an die zweite Basisstation (12) sendet, die es der zweiten Basisstation (12) ermöglichen, ihre Antenneneinstellungen in Abhängigkeit davon anzupassen.

3. Verfahren nach Anspruch 1 oder 2, wobei die Schritte des Empfangens (31) von Informationen und des Anpassens der Antenneneinstellungen ($UL_{macro,ta}$, $DL_{macro,ta}$; $UL_{pico,ta}$, $DL_{pico,ta}$) wiederholt werden, wodurch die Antenneneinstellungen ($UL_{macro,ta}$, $DL_{macro,ta}$; $UL_{pico,ta}$, $DL_{pico,ta}$) dynamisch angepasst werden.

4. Verfahren nach einem der vorhergehenden Ansprüche, wobei die Informationen ein oder mehrere der folgenden umfassen: eine Sendeleistung der ersten zweiten Basisstation (11), eine Höhe der mindestens einen der jeweiligen Antennen (13, 14) der ersten und/oder zweiten Basisstation (11, 12), eine Entfernung zwischen der ersten und der zweiten Basisstation (11, 12).

5. Verfahren nach einem der vorhergehenden Ansprüche, wobei das drahtlose Kommunikationssystem (10) ein heterogenes zellulares Netzwerk umfasst, das übergeordnete Zellen (15) und untergeordnete Zellen (16, 17, 18) umfasst.

6. Verfahren nach einem der vorhergehenden Ansprüche, wobei die erste Basisstation (11) sich in einer übergeordneten Zelle (15) befindet und die zweite Basisstation (12) sich in einer untergeordneten Zelle (16) befindet, wobei das Verfahren den folgenden weiteren Schritt in der ersten Basisstation (11) umfasst:

- Senden von Informationen zu ihrer Sendeleistung an die zweite Basisstation (12) und jede beliebige andere Basisstation (19, 20), die sich in einer der übergeordneten Zelle (15) untergeordneten Zelle (17, 18) befindet.

7. Verfahren nach Anspruch 6, umfassend den folgenden weiteren Schritt:

- Anpassen des Uplink-Neigungswinkels nach unten und des Downlink-Neigungswinkels nach unten in der ersten Basisstation (11) auf Grundlage des Standorts der zweiten Basisstation (12) und jeder beliebigen anderen Basisstation, die sich in der übergeordneten Zelle (15) befindet.

8. Verfahren nach Anspruch 7, wobei das Anpassen das Einstellen eines Uplink-Neigungswinkels nach unten, der kleiner ist als ein Downlink-Neigungswinkel nach unten, wenn die Mehrheit der Basisstationen (12, 19, 20) der untergeordneten Zellen (16, 17, 18) sich in der Nähe des Zellrands der ersten Basisstation (11) befindet, oder das Einstellen eines Uplink-Neigungswinkels nach unten, der dem Downlink-Neigungswinkel nach unten entspricht, wenn die Basisstationen (12, 19, 20) der untergeordneten Zellen (16, 17, 18) gleichmäßig in der übergeordneten Zelle (15) verteilt sind, umfasst.

9. Verfahren nach einem der Ansprüche 1-5, wobei sich die erste Basisstation (11) in einer untergeordneten Zelle (16) befindet und die zweite Basisstation (12) sich in einer übergeordneten Zelle (15) befindet.

10. Verfahren nach einem der vorhergehenden Ansprüche, wobei der Schritt des Anpassens (32) in der ersten Basisstation (11) die folgenden Teilschritte umfasst:

- Bestimmen der Antenneneinstellungen der Antenne (13) der ersten Basisstation (11) in Abhängigkeit von den Informationen, und
- Senden von Steuersignalen (32) an eine Antennensteuervorrichtung (25), die die Antenne (13) der ersten Basisstation (11) steuert, wodurch es der Antennensteuervorrichtung (25) ermöglicht wird, die Antenneneinstellungen ($UL_{macro,ta}$, $DL_{macro,ta}$; $UL_{pico,ta}$, $DL_{pico,ta}$) anzupassen.

11. Computerprogramm (100) für Zellauswahlbalance in einem heterogenen drahtlosen Kommunikationsnetzwerk (10), wobei das Programm einen Computerprogrammcode umfasst, der, wenn er auf einer Verarbeitungsvorrichtung (26) einer Basisstation (11, 12, 19, 20) des drahtlosen Kommunikationsnetzwerks (10) ausgeführt wird, die Verarbeitungsvorrichtung (26) dazu veranlasst:

- von einer oder mehreren anderen Basisstationen (11, 12, 19, 20) empfangene Informationen zu verarbeiten, um Antenneneinstellungen einer Antenne der Basisstation in Abhängigkeit von den Informationen zu bestimmen, wobei die Informationen eine Sendeleistung der einen oder der mehreren anderen Basisstationen (11, 12, 19, 20) umfassen;
- in der Basisstation (11, 12, 19, 20) eine Downlink-Sendeleistung der Basisstation (11, 12, 19, 20) mit der empfangenen Sendeleistung der einen oder der mehreren anderen Basisstationen (11, 12, 19, 20) zu vergleichen, um eine Differenz, ∆P, zwischen ihnen zu bestimmen; und
- Steuersignale (32) an eine Antennensteuervorrichtung (25) zu senden, die die Antenne der Basisstation (11, 12, 19, 20) steuert, um Antenneneinstellungen ($UL_{macro,ta}$, $DL_{macro,ta}$; $UL_{pico,ta}$, $DL_{pico,ta}$), die einen Uplink-Neigungswinkel ($UL_{macro,ta}$, $UL_{pico,ta}$) oder einen Downlink-Neigungswinkel ($DL_{macro,ta}$, $DL_{pico,ta}$) umfassen, der Antenne in Abhängigkeit von der Differenz, ∆P, anzupassen, um unterschiedliche Neigungswinkel nach unten für Uplink und Downlink zu bilden.

12. Computerprogrammprodukt (110), umfassend ein Computerprogramm (100) nach Anspruch 11 und ein computerlesbares Medium, auf dem das Computerprogramm gespeichert ist.

**Revendications**

1. Procédé d'équilibrage de sélection de cellule dans un système de communication sans fil hétérogène (10) comprenant au moins une première et une seconde stations de base (11, 12) et au moins un équipement utilisateur (1), lesdites première et seconde stations de base (11, 12) comprenant au moins une antenne respective (13, 14) pour transmettre une signalisation de liaison descendante et recevoir une signalisation de liaison montante pour communiquer avec ledit au moins un équipement utilisateur (1), ledit procédé (30) comprenant les étapes de :

- réception (31), dans ladite première station de base (11), d'informations provenant de ladite seconde station de base (12), les informations comprenant une puissance de transmission de la seconde station de base (12),
comparaison, dans ladite première station de base (11) de la puissance de transmission de liaison descendante de ladite première station de base (11) avec ladite puissance de transmission reçue de ladite seconde station de base (12) pour déterminer une différence, ∆P, entre elles ; et
- réglage (32), dans ladite première station de base (11), de réglages d'antenne ($UL_{macro,ta}$, $DL_{macro,ta}$; $UL_{pico,ta}$, $DL_{pico,ta}$) de l'antenne (13) de la première station de base (11) en fonction de ladite différence, ∆P, dans lequel lesdits réglages d'antenne comprennent un angle d'inclinaison de liaison montante ($UL_{macro,ta}$, $UL_{pico,ta}$), ou un angle d'inclinaison de liaison descendante ($DL_{macro,ta}$, $DL_{pico,ta}$), formant une inclinaison vers le bas différente pour la liaison montante et la liaison descendante.

2. Procédé selon la revendication 1, comprenant une étape supplémentaire de ladite première station de base (11) transmettant des informations à ladite seconde station de base (12), permettant à ladite seconde station de base (12) de régler ses réglages d'antenne en fonction de ceux-ci.

3. Procédé selon la revendication 1 ou 2, dans lequel lesdites étapes de réception (31) d'informations et de réglage de réglages d'antenne ($UL_{macro,ta}$, $DL_{macro,ta}$; $UL_{pico,ta}$, $DL_{pico,ta}$) sont répétées, par lesquelles lesdits réglages d'antenne ($UL_{macro,ta}$, $DL_{macro,ta}$ ; $UL_{pico,ta}$, $DL_{pico,ta}$) sont réglés dynamiquement.

**4.** Procédé selon l'une quelconque des revendications précédentes, dans lequel lesdites informations comprennent une ou plusieurs parmi : la puissance de transmission de ladite première seconde station de base (11), la hauteur de ladite au moins une antenne respective (13, 14) de ladite première et/ou seconde station de base (11, 12), la distance entre lesdites première et seconde stations de base (11, 12).

**5.** Procédé selon l'une quelconque des revendications précédentes, dans lequel ledit système de communication sans fil (10) comprend un réseau cellulaire hétérogène comprenant des cellules superposées (15) et des cellules sous-jacentes (16, 17, 18) .

**6.** Procédé selon l'une quelconque des revendications précédentes, dans lequel ladite première station de base (11) est située dans une cellule superposée (15) et ladite seconde station de base (12) est située dans une cellule sous-jacente (16), comprenant, dans ladite première station de base (11), l'étape supplémentaire de :

- transmission d'informations sur sa puissance de transmission à ladite seconde station de base (12) et à toute autre station de base (19, 20) située dans une cellule sous-jacente (17, 18) à ladite cellule superposée (15).

**7.** Procédé selon la revendication 6, comprenant l'étape supplémentaire de :

- réglage, dans ladite première station de base (11), de l'angle d'inclinaison vers le bas de liaison montante et de l'angle d'inclinaison vers le bas de liaison descendante sur la base de l'emplacement de ladite seconde station de base (12) et de toutes autres stations de base situées dans ladite cellule superposée (15) .

**8.** Procédé selon la revendication 7, dans lequel ledit réglage comprend le réglage de l'angle d'inclinaison vers le bas de liaison montante plus petit que l'angle d'inclinaison de liaison descendante si la plupart desdites stations de base (12, 19, 20) desdites cellules sous-jacentes (16, 17, 18) sont situées à proximité d'un bord de cellule desdites premières stations de base (11), ou le réglage de l'angle d'inclinaison vers le bas de liaison montante égal audit angle d'inclinaison vers le bas de liaison descendante si lesdites stations de base (12, 19, 20) desdites cellules sous-jacentes (16, 17, 18) sont uniformément réparties dans ladite cellule superposée (15).

**9.** Procédé selon l'une quelconque des revendications 1 à 5, dans lequel ladite première station de base (11) est située dans une cellule sous-jacente (16) et ladite seconde station de base (12) est située dans une cellule superposée (15).

**10.** Procédé selon l'une quelconque des revendications précédentes, dans lequel ladite étape de réglage (32), dans ladite première station de base (11), comprend les sous-étapes de :

- détermination de réglages d'antenne de ladite antenne (13) de ladite première station de base (11) en fonction desdites informations, et
- transmission de signaux de commande (32) à un dispositif de commande d'antenne (25) commandant ladite antenne (13) de ladite station de base (11), permettant ainsi audit dispositif de commande d'antenne (25) de régler lesdits réglages d'antenne ($UL_{macro,ta}$, $DL_{macro,ta}$ ; $UL_{pico,ta}$, $DL_{pico,ta}$).

**11.** Programme d'ordinateur (100) pour l'équilibrage de sélection de cellule dans un réseau de communication sans fil hétérogène (10) comprenant un code de programme d'ordinateur qui, lorsqu'il est exécuté sur un dispositif de processeur (26) d'une station de base (11, 12, 19, 20) dudit réseau de communication sans fil (10), amène ledit dispositif de processeur (26) à :

- traiter des informations reçues par une ou plusieurs autres stations de base (11, 12, 19, 20) afin de déterminer des réglages d'antenne d'une antenne de ladite station de base en fonction desdites informations, les informations comprenant la puissance de transmission des une ou plusieurs autres stations de base (11, 12, 19, 20) ;
comparer, dans ladite station de base (11, 12, 19, 20), une puissance de transmission de liaison descendante de ladite station de base (11, 12, 19, 20) avec ladite puissance de transmission reçue par les une ou plusieurs autres stations de base (11, 12, 19, 20) pour déterminer une différence, $\Delta P$, entre elles ; et
- transmettre des signaux de commande (32) à un dispositif de commande d'antenne (25) commandant ladite antenne de ladite station de base (11, 12, 19, 20) pour régler des réglages d'antenne ($UL_{macro,ta}$, $DL_{macro,ta}$ ; $UL_{pico,ta}$, $DL_{pico,ta}$), comprenant un angle d'inclinaison de liaison montante ($UL_{macro,ta}$, $UL_{pico,ta}$) ou un angle d'inclinaison de liaison descendante ($DL_{macro,ta}$, $DL_{pico,ta}$), de ladite antenne en fonction de ladite différence, $\Delta P$, formant une inclinaison vers le bas différente pour la liaison montante et la liaison descendante.

**12.** Produit programme d'ordinateur (110) comprenant un programme d'ordinateur (100) selon la revendication 11 et un moyen lisible par ordinateur sur lequel ledit programme d'ordinateur est stocké.

Fig. 1

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050130662 A